Europäisches Patentamt

European Patent Office

Office européen des brevets

(19)

(11) **EP 1 575 177 A1**

(12) **EUROPEAN PATENT APPLICATION**

(43) Date of publication:
**14.09.2005 Bulletin 2005/37**

(51) Int Cl.⁷: **H04B 1/16**, H02J 7/00

(21) Application number: **05004570.7**

(22) Date of filing: **02.03.2005**

(84) Designated Contracting States:
**AT BE BG CH CY CZ DE DK EE ES FI FR GB GR
HU IE IS IT LI LT LU MC NL PL PT RO SE SI SK TR**
Designated Extension States:
**AL BA HR LV MK YU**

(30) Priority: **08.03.2004 JP 2004063603**

(71) Applicant: **NEC CORPORATION**
**Tokyo (JP)**

(72) Inventor: **Kokubu, Akiteru**
**Tokyo (JP)**

(74) Representative: **Vossius & Partner**
**Siebertstrasse 4**
**81675 München (DE)**

(54) **Battery switching circuit for a portable communication device, battery switching method therefor, and battery switching program therefor**

(57)     A battery switching circuit is provided for a portable communication device provided with a plurality of batteries in which the total amount of charged power of the batteries can be consumed completely. Further, the battery switching circuit prevents a voltage from being applied from one battery to another battery. That is, each of the switching elements connecting each of the batteries and the load portion includes two field effect transistors which are connected with each other in series, a gate electrode of each of the field effect transistors is connected with the selector switch, source electrodes of the field effect transistors are connected with each other, the drain electrodes of the field effect transistors are connected with one of a corresponding battery and the load respectively.

POWER SOURCE CIRCUIT
10

13 BATTERY PORTION

BATTERY SWITCHING CIRCUIT
12

11

FIRST SWITCHING ELEMENT
121b DIODE  121a DIODE  121

CHARGING CIRCUIT

131
FIRST BATTERY

SECOND SWITCHING ELEMENT
122b DIODE  122a DIODE  122

20

LOAD CIRCUIT

132
SECOND BATTERY

SELECTOR SWITCH
123

INVERTER
124

123a

V1

123b

V2

SW

123d

RESET SIGNAL

RST

123c

123a: FIRST TERMINAL
123b: SECOND TERMINAL
123c: THIRD TERMINAL
123d: OUTPUT TERMINAL

FIG.3

## Description

The present invention relates to a battery switching circuit for a portable communication device and a battery switching method for the portable communication device.

A portable communication device represented by a portable telephone terminal device driven by a battery is generally provided with an auxiliary battery which is reserved for the consumption of battery in addition to a main battery. FIG. 7 shows a portable telephone terminal device described in JP 06-45979 A (published on February 18, 1994) as an example of the portable communication device provided with the main battery and the auxiliary battery. A portable telephone terminal apparatus 101 transmits and receives a radio signal to and from a base station 113. The base station 113 includes a mobile telephone exchange 114. The mobile telephone exchange 114 performs connection processing with a subscriber 116 through a network 115. That is, the portable telephone terminal apparatus 101 communicates with the subscriber 116 through the base station 113 and the network 115.

The portable telephone terminal apparatus 101 includes a main battery 104, an auxiliary battery 109, an output voltage monitoring circuit 103, and a power source switching circuit 106. The portable telephone terminal apparatus 101 further includes a buzzer 102, a receiver 107, a transmitter 108, a directional coupler 110, an antenna 111, and a control circuit 105.

The output voltage monitoring circuit 103 monitors an output voltage of the main battery 104. The power source switching circuit 106 switches a power source for the portable telephone terminal apparatus 101 from the main battery 104 to the auxiliary battery 109.

When the output voltage monitoring circuit 103 detects a reduced output voltage of the main battery 104, the control circuit 105 sends a notice indicating a reduction in output voltage of the main battery 104 to the mobile telephone exchange 114 through the transmitter 108 and the directional coupler 110. Simultaneously, the control unit 105 transmits a power source switching signal to the power source switching circuit 106.

The power source switching is performed by the portable telephone terminal apparatus 101 as will be described. Detecting a reduced output voltage of the main battery 10, the output voltage monitoring circuit 103 transmits a detection signal indicating a reduction in output voltage to the control circuit 105. Receiving the detection signal, the control circuit 105 causes the buzzer 102 to sound in order to inform a user of a reduction in output voltage of the main battery 104. Simultaneously, the control unit 105 transmits the power source switching signal to the power source switching circuit 106, so that the power source is switched from the main battery 104 to the auxiliary battery 109.

When the output voltage of the main battery 104 is restored while the auxiliary battery 109 is used and the output voltage monitoring circuit 103 detects the restored output voltage of the main battery 104, the output voltage monitoring circuit 103 transmits a detection signal indicating the restoration of the output voltage of the main battery 104 to the control circuit 105. Receiving the detection signal, the control circuit 105 transmits a power source switching signal to the power source switching circuit 106, so that the power source is switched from the auxiliary battery 109 to the main battery 104.

As described above, when the output voltage of the main battery 104 reduces (the main battery 104 is exhausted), the power source is switched from the mainbattery 104 to the auxiliary battery 109. Thus, the portable telephone terminal apparatus 101 can continue communication without interruption.

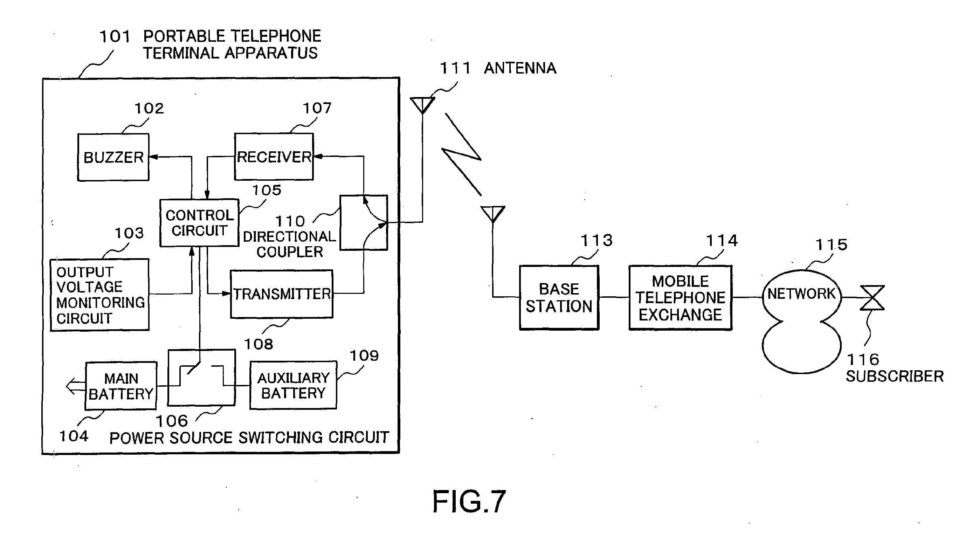

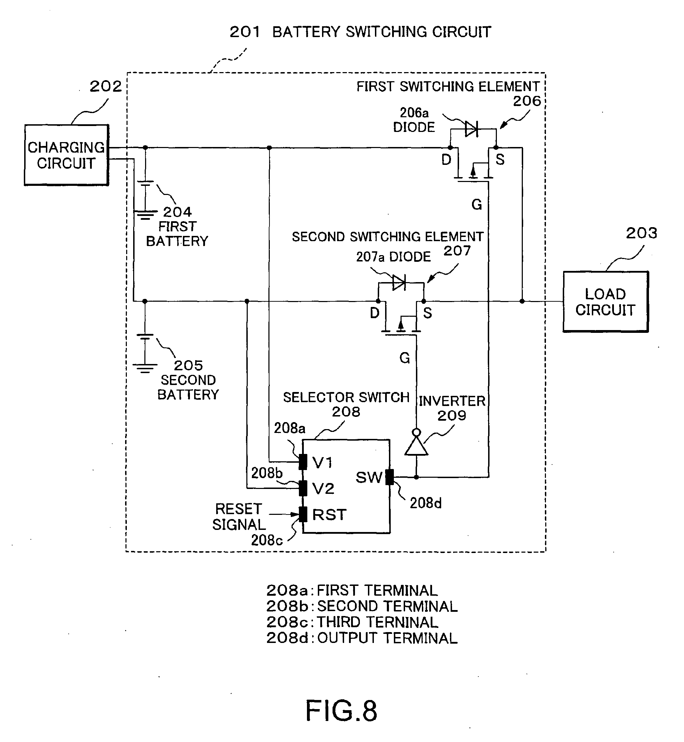

FIG. 8 is a block diagram showing an example of another conventional power source switching circuit which operates based on the same principal as that of the power source switching circuit 106 shown in FIG. 7. A power source switching circuit 201 is composed of a first battery 204, a second battery 205, a first switching element 206, a second switching element 207, a selector switch 208, and an inverter 209. For example, assume that the first battery 204 is used as the main battery and the second battery 205 is used as the auxiliary battery. A diode in each of the first switching element 206 and the second switching element 207 is a parasitic diode.

The first switching element 206 is connected with the first battery 204 and a load circuit 203. The second switching element 207 is connected with the second battery 205 and the load circuit 203. The first switching element 206 and the second switching element 207 are each composed of a P-channel MOS silicon field effect transistor.

The selector switch 208 has a first terminal 208a, a second terminal 208b, a third terminal 208c, and an output terminal 208d. A signal indicating an output voltage V1 of the first battery 204 is inputted to the first terminal 208a. A signal indicating an output voltage V2 of the second battery 205 is inputted to the second terminal 208b. A reset signal RST is inputted to the third terminal 208c. A switching signal SW is transmitted from the output terminal 208d to the first switching element 206 and the second switching element 207.

The first battery 204 and the second battery 205 are connected with a charging circuit 202. The first switching element 206 and the second switching element 207 are connected with the load circuit 203 (for example, a radio signal transmitter-receiver or a display device) of a device including the power source switching circuit 201 (for example, a portable telephone terminal device and other portable communication devices).

The selector switch 208 transmits the switching signal SW to any one of the first switching element 206 and the second switching element 207, so that one of the first switching element 206 and the second switching element 207 is activated and the other thereof is deactivated. When the first switching element 206 is activated, the first battery 204 is connected with the load circuit 203 through the first switching element 206. When the second switching element 207 is activated, the second battery 205 is connected with the load circuit 203 through the second switching element 207.

As described above, any one of the first battery 204 and the second battery 205 is connected with the load circuit 203 by the selector switch 208. Therefore, power is constantly supplied to the load circuit 203.

However, the power source switching circuit 201 shown in FIG. 8 has the following problems. A first problem is that the total amount of charged power of the first battery 204 and the second battery 205 cannot be consumed completely because of a voltage drop characteristic of the parasitic diode in each of the first switching element 206 and the second switching element 207. In particular, an average standard voltage of a lithium ion battery which is used for a large number of portable communication devices such as the portable telephone terminal devices is merely about 3.7 V. Therefore, it is impossible to neglect voltage drop caused by the parasitic diode (diode 206a or diode 207a) of the P-channel MOS silicon field effect transistor.

A second problem results from characteristics of the first switching element 206 and the second switching element 207. Because of the characteristics, a voltage is applied from one battery (for example, the first battery 204) to the other battery (for example, the second battery 205) in some cases.

An exemplary feature of the present invention is to provide a battery switching circuit for a portable communication device provided with two batteries (for example, a main battery and an auxiliary battery) or three ormore batteries, which is capable of consuming the total amount of charged power of the batteries completely, and a battery switching method therefor. Further, another exemplary feature of the present invention is to provide a battery switching circuit in which a voltage is prevented from being applied from one battery to another battery, and a battery switching method therefor.

The present invention provides a battery switching circuit for a portable communication device including a plurality of batteries, which selects a battery from the plurality of batteries and connects the selected battery with a load of the portable communication device, in which the battery switching circuit includes a selector switch that controls an order in which the plurality of batteries are used.

Also, the present invention provides a battery switching circuit for a portable communication device including a plurality of batteries, which selects a battery from the plurality of batteries and connects the selected battery with a load of the portable communication device, the battery switching circuit including: a plurality of switching elements, the number of which is equal to the number of batteries, being connected with the plurality of batteries on a one-to-one basis and connected with the load; and a selector switch which is connected with each of the plurality of batteries and each of the plurality of switching elements, which monitors an output voltage of each of the plurality of batteries, activates a switching element corresponding to a second battery holding power when a charged power of a first battery is completely consumed, and connects the second battery with the load through the switching element corresponding to the second battery, in which each of the switching elements includes two field effect transistors which are connected with each other in series, a gate electrode of each of the two field effect transistors is connected with the selector switch, one electrode of source and drain electrodes of the two field effect transistor is connected with each other, and the other electrode of the source and drain electrodes of the two field effect transistor is connected with one of a corresponding battery and the load.

A P-channel field effect transistor, for example, may be used as field effect transistor according to the present invention.

Further, the present invention provides a portable communication device, including: a plurality of batteries, at least one of the plurality of batteries being detachably attachable to the portable communication device; and a battery switching circuit which selects a battery from the plurality of batteries and connects the selected battery with a load of the portable communication device, in which the battery switching circuit for a portable communication device includes a plurality of switching elements connected with the plurality of batteries and the load; and a selector switch which is connected with each of the plurality of batteries and each of the plurality of switching elements, which monitors an output voltage of each of the plurality of batteries, activates a switching element corresponding to a second battery holding power when a charged power of a first battery is completely consumed, connects the second battery with the load through the switching element corresponding to the second battery, and determines whether or not a detachably attachable battery is connected with the portable communication device, in which each of the switching elements includes two field effect transistors (FET) which are connected with each other in series, a gate electrode of each of the two field effect transistors is connected with the selector switch, one electrode of source and drain electrodes of the two field effect transistor is connected with each other, and the other electrode of the source and drain electrodes of the two field effect transistor is connected with one of a corresponding battery and the load.

Each of first and second fieldeffect transistors according to the present invention may be a P-channel field effect transistor.

A portable communication device according to the present invention may be, for example, a portable telephone terminal device.

Further, the present invention provides a battery switching method for a portable communication device for selecting a battery from a plurality of batteries included in the portable communication device and connecting the selected battery with a load of the portable communication device, the method including: comparing an output voltage of a first battery of the plurality of batteries with a minimal voltage at which the portable communication device operates; comparing an output voltage of a second battery of the plurality of batteries with the minimal voltage when the output voltage of the first battery is lower than the minimal voltage; connecting the second battery with the load when the output voltage of the second battery is higher than the minimal voltage; and a process for connecting the first battery with the load when the output voltage of the first battery is restored to become higher than the minimal voltage after the output voltage of the second battery becomes lower than the minimal voltage.

Further, the present invention provides a battery switching method for a portable communication device for selecting a battery from a plurality of batteries included in the portable communication device and connecting the selected battery with a load of the portable communication device, the battery switching method including: comparing an output voltage of a first battery of the plurality of batteries with a minimal voltage at which the portable communication device operates; comparing an output voltage of a battery of the plurality of batteries other than the first battery with the minimal voltage when the output voltage of the first battery is lower than the minimal voltage, and repeatedly connecting the battery other than the first battery with the load when the output voltage of the battery other than the first battery is higher than the minimal voltage; and connecting the first battery with the load when the output voltage of the first battery is restored to become higher than the minimal voltage after the output voltage of the battery other than the first battery becomes lower than the minimal voltage.

According to the present invention, a battery switching method for a portable communication device may further include connecting the first battery with the load when the output voltage of the first battery is higher than the minimal voltage.

A battery switching method for a portable communication device according to the present invention, when at least one of the plurality of batteries is detachably attachable to the portable communication device, may further include determining whether or not a detachably attachable battery is connected with the portable communication device.

The present invention provides a signal-bearing medium tangibly storing a program of machine-readable instructions for causing a computer to execute a battery switching method for a portable communication device for selecting a battery from a plurality of batteries included in the portable communication device and connecting the selected battery with a load of the portable communication device, in which the program includes; a first process for comparing an output voltage of a first battery of the plurality of batteries with a minimal voltage at which the portable communication device operates; a second process for comparing an output voltage of a second battery of the plurality of batteries with the minimal voltage when the output voltage of the first battery in lower than the minimal voltage; a third process for connecting the second battery with the load when the output voltage of the second battery is higher than the minimal voltage; a fourth process for connecting the first battery with the load when the output voltage of the first battery is restored to become higher than the minimal voltage after the output voltage of the second battery becomes lower than the minimal voltage.

Further, the present invention provides a signal-bearing medium tangibly storing a program of machine-readable instructions for causing a computer to execute a battery switching method for a portable communication device for selecting a battery from a plurality of batteries included in the portable communication device and connecting the selected battery with a load of the portable communication device, in which the program includes: a first process for comparing an output voltage of a first battery of the plurality of batteries with a minimal voltage at which portable communication device operates; a second process for comparing an output voltage of a battery other than the first battery with the minimal voltage when the output voltage of the first battery is lower than the minimal voltage, and repeatedly connecting the battery other than the first battery with the load when the output voltage of the battery other than the first battery is higher than the minimal voltage; and a third process for connecting the first battery with the load when the output voltage of the first battery is restored to become higher than the minimal voltage after the output voltage of the battery other than the first battery becomes lower than the minimal voltage.

A signal-bearing medium tangibly storing a program of machine-readable instructions for causing a computer to execute a battery switching method for a portable communication device according to the present invention, when at least one of the plurality of batteries is detachably attachable to the portable communication device, may further include a process of determining whether or not a detachably attachable battery is connected with the portable communication device.

Further, the present invention provides a battery switching circuit for a portable communication device including a plurality of batteries, including: means for selecting a battery from the plurality of batteries; means for connecting the selected battery with a load of the portable communication device, and means for controlling an order in which the plurality of batteries are used.

According to the present invention, the following exemplary advantages are obtained. According to a first exemplary advantage, while one battery is used, another battery is not used, so that the total amount of charged power of the battery can be completely consumed within a limited range (up to a minimal voltage at which a portable telephone device operates). According to another exemplary advantage, while one battery is used, another battery is not used, so that a voltage of the battery which is not used can be prevented from acting on the battery which is being used.

These and other exemplary aspects, features and advantages of the invention will become more fully apparent from the following detailed description taken in conjunction with accompanying drawings. In the accompanying drawings:

FIG. 1 is a block diagram showing a portable telephone device to which a battery switching circuit according to a first exemplary embodiment of the present invention is applied;
FIG. 2 is a block diagram showing a power source portion in the first exemplary embodiment of the present invention;
FIG. 3 is a block diagram showing a battery portion and the battery switching circuit in the first exemplary embodiment of the present invention;
FIG. 4 is a flow chart showing operation of the battery switching circuit according to the first exemplary embodiment of the present invention;
FIG. 5 is a block diagram showing a power source portion of a portable telephone device according to a second exemplary embodiment of the-present invention;
FIG. 6 is a flow chart showing operation of a battery switching circuit according to the second exemplary embodiment of the present invention;
FIG. 7 is a block diagram showing an example of a conventional portable communication device provided with an auxiliary battery in addition to a main battery; and
FIG. 8 is a block diagram showing an example of a conventional power source switching circuit.

(First Embodiment)

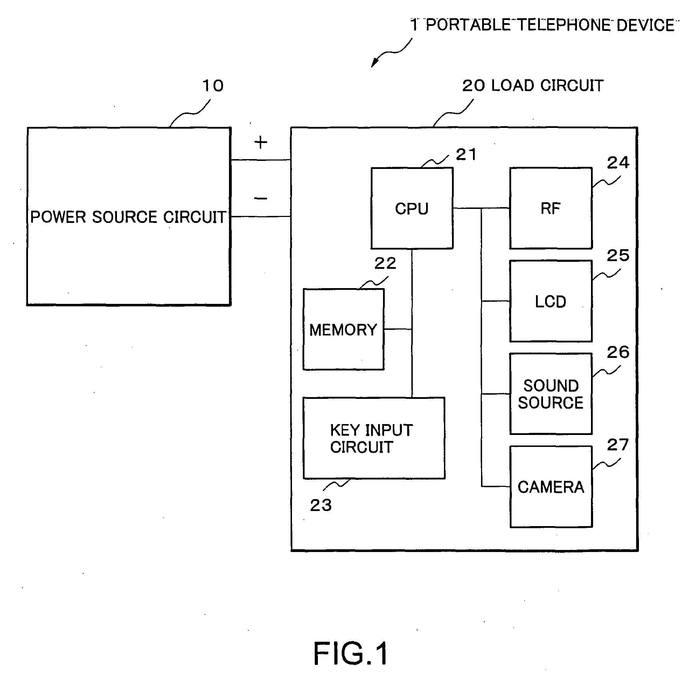

FIG. 1 is a block diagram showing a portable telephone device 1 to which a battery switching circuit according to a first exemplary embodiment of the present invention is applied. The portable telephone device 1 is provided with a power source circuit 10 and a load circuit 20. The power source circuit 10 serves as a power source for the load circuit 20 and supplies power to the load circuit 20. The load circuit 20 includes a central processing unit (CPU) 21, a memory 22, a key input circuit 23, a radio signal processing portion (RF) 24, a liquid crystal display device (LCD) 25, a sound source 26, and a camera 27.

The central processing unit 21 controls the memory 22, the key input circuit 23, the radio signal processing portion (RF) 24, the liquid crystal display device (LCD) 25, the sound source 26, and the camera 27. The memory 22 stores control programs and various data for the central processing unit 21. The key input circuit 23 includes a plurality of keys for inputting data to the central processing unit 21. The radio signal processing portion (RF) 24 performs radio signal transmission and reception and radio signal modulation and demodulation. The liquid crystal display device (LCD) 25 displays data inputted through the key input circuit 23 and received radio signal contents. The sound source 26 generates a terminating sound when the radio signal is received.

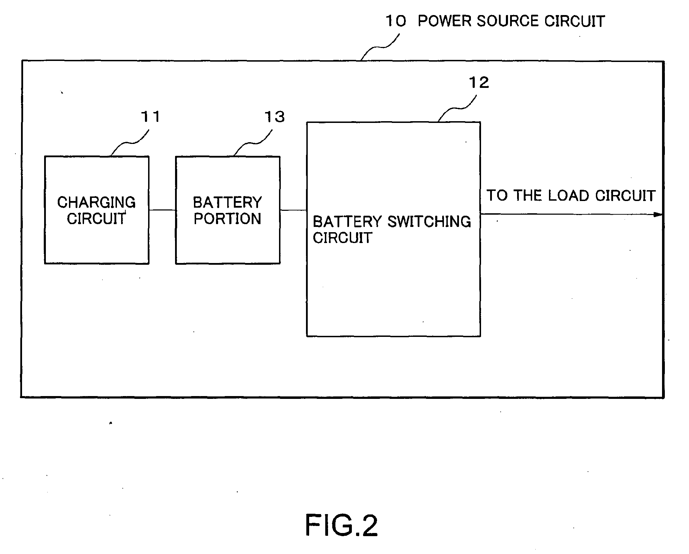

FIG. 2 is a block diagram showing the power source circuit 10 in the first exemplary embodiment of the present invention. The power source circuit 10 has a charging circuit 11, a battery portion 13 including a plurality of batteries, and a battery switching circuit 12. The charging circuit 11 charges the plurality of batteries of the battery portion 13. The battery switching circuit 12 selects any one of the plurality of batteries included in the battery portion 13 and connects the selected battery with the load circuit 20. The battery switching circuit 12 also controls the order in which the plurality of batteries are used and the order in which the plurality of batteries are charged.

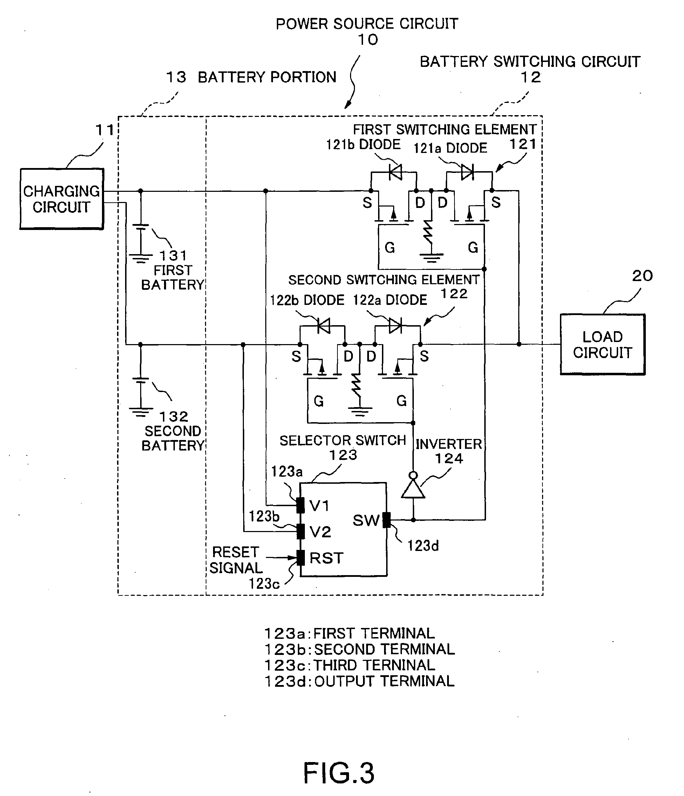

FIG. 3 is a block diagram showing the battery portion 13 and the battery switching circuit 12 in the first exemplary embodiment of the present invention. The battery portion 13 includes a first battery 131 (output voltage V1) and a second battery 132 (output voltage V2). A positive electrode of each of the first battery 131 and the second battery 132 is connected with the charging circuit 11 and the battery switching circuit 12. A negative electrode of each of the first battery 131 and the second battery 132 is grounded. Each of the first battery 131 and the second battery 132 is, for'example, composed of a lithium ion battery. Further, the first battery 131 is used as the main battery and the second battery 132 is used as the auxiliary battery, for example.

The battery switching circuit 12 includes a first switching element 121, a second switching element 122, a selector switch 123, and an inverter 124. That is, the number of switching elements may be equal to the number of batteries. The switching elements may be connected with the plurality of batteries on a one-to-one basis. The first switching element 121 is connected with the positive electrode of the first battery 131 and the load circuit 20. The second switching element 122 is connected with the positive electrode of the second battery 132 and the load circuit 20. The inverter 124 is located between the selector switch 123 and the second switching element 122.

The selector switch 123 is connected with the first battery 131, the second battery 132, the first switching element 121, and the second switching element 122. The selector switch 123 has a first terminal 123a, a second terminal 123b, a third terminal 123c, and an output terminal 123d. A signal indicating an output voltage V1 of the first battery 131 is inputted to the first terminal 123a. A signal indicating an output voltage V2 of the second battery 132 is inputted to the second terminal 123b. A reset signal RST is inputted to the third terminal 123c. A switching signal SW is transmitted from the output terminal 123d to the first switching element 121 and the second switching element 122.

The first switching element 121 is composed of two P-channel MOS silicon field effect transistors which are connected with each other in series. In other words, the first switching element 121 is composed of the P-channel MOS silicon field effect transistors of two stages. A gate electrode G of each of the two P-channel MOS silicon field effect transistors is connected with the output terminal 123d of the selector switch 123. Drain electrodes D of the two P-channel MOS silicon field effect transistors are connected with each other. A source electrode S of one of the two P-channel MOS silicon field effect transistors is connected with the first battery 131. A source electrode S of the other P-channel MOS silicon field effect transistor is connected with the load circuit 20.

The second switching element 122 is composed of two P-channel MOS silicon field effect transistors which are connected with each other in series as in the first switching element 121. A gate electrode G of each of the two P-channel MOS silicon field effect transistors is connected with the output terminal 123d of the selector switch 123 through the inverter 124. Drain electrodes D of the two P-channel MOS silicon field effect transistors are connected with each other. A source electrode S of one of the two P-channel MOS silicon field effect transistors is connected with the second battery 132. A source electrode S of the other P-channel MOS silicon field effect transistor is connected with the load circuit 20. The selector switch 123 is composed of, for example, an integrated circuit.

The selector switch 123 monitors the output voltage of each of the first battery 131 and the second battery 132. For example, when the charged power of the first battery 131 is completely consumed, the selector switch 123 causes the second switching element 122 to activate, so that the second battery 132 that holds charged power is connected with the load circuit 20 through the second switching element 122. Note that each diode in each of the first switching element 121 and the second switching element 122 is a parasitic diode.

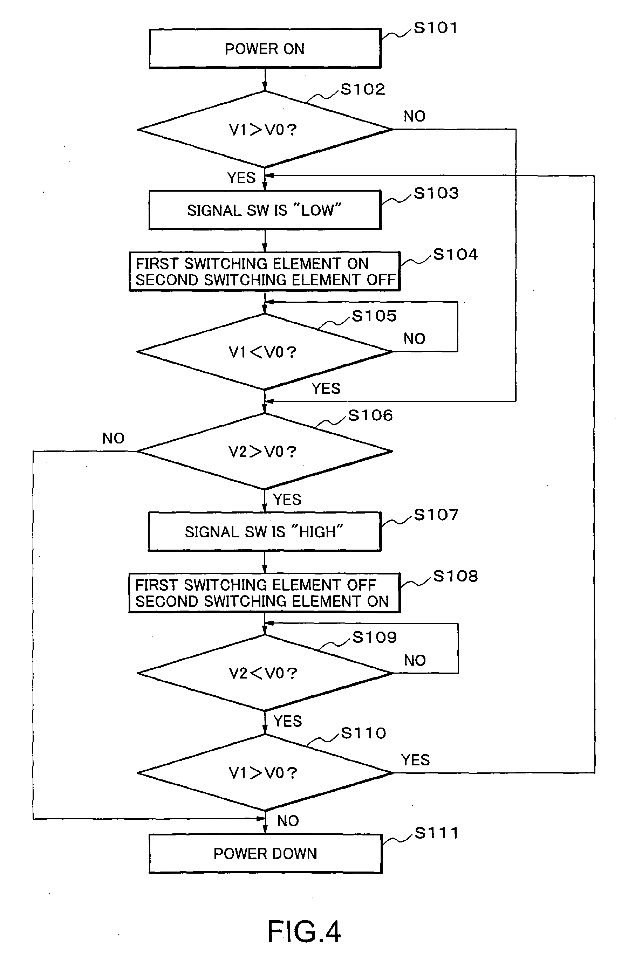

FIG. 4 is a flow chart showing operation of the battery switching circuit 12 according to the first exemplary embodiment of the present invention. Hereinafter, the operation of the battery switching circuit 12 will be described with reference to FIG. 4.

When a power switch of the portable telephone device 1 is turned on (Step S101), the battery switching circuit 12 starts to operate. Then, the reset signal RST becomes active, so that the selector switch 123 is reset.

Next, the selector switch 123 receives the signal indicating the output voltage V1 of the first battery 131 at the first terminal 123a and determines whether or not the output voltage V1 is higher than a minimal voltage V0 at which the portable telephone device 1 operates (Step S102).

When the output voltage V1 is higher than the minimal voltage V0 (V1 > V0) (YES in Step S102), this indicates that the first battery 131 has power capable of normally operating the portable telephone device 1. In such a case, the selector switch 123 sets the switching signal SW to a low (Low) level and transmits the switching signal SW of the low level to the first switching element 121 and the second switching element 122 (Step S103).

The switching signal SW of the low level is transmitted to the gate electrode G of each of the two P-channel MOS silicon field effect transistors composing the first switching element 121 without any processing. On the other hand, the switching signal SW of the low level is inverted by passing through the inverter 124 and becomes a high (High) level. Therefore, the switching signal SW of the high level is transmitted to'the gate electrode G of each of the two P-channel MOS silicon field effect transistors composing the second switching element 122.

As a result, each of the two P-channel MOS silicon field effect transistors composing the first switching element 121 becomes an ON state between the drain electrode D and the source electrode S, and each of the two P-channel MOS silicon field effect transistors composing the second switching element 122 becomes an OFF state between the drain electrode D and the source electrode S (Step S104). Therefore, the output voltage V1 of the first battery 131 is applied to the load circuit 20 through the first switching element 121 which is in the ON state. On the other hand, the output voltage V2 of the second battery 132 is not applied to the load circuit 20 because the second switching element 122 is in the OFF state. That is, the portable telephone device 1 becomes a state in which the first battery 131 is in use as the power source. As the first battery 131 is used, the output voltage V1 gradually reduces.

After the transmission of the switching signal SW, the selector switch 123 constantly monitors whether or not the output voltage V1 is lower than the minimal voltage V0 (V1 < V0) (Step S105). The selector switch 123 continues to monitor until the output voltage V1 becomes lower than the minimal voltage V0 (V1 < V0) (NO in Step S105).

When the output voltage V1 becomes lower than the minimal voltage V0 (YES in Step S105) or when the output voltage V1 is not higher than the minimal voltage V0 (NO in Step S102) (that is, V1 ≤ V0), the selector switch 123 receives the signal indicating the output voltage V2 at the second terminal 123b. Then, whether or not the output voltage V2 is higher than the minimal voltage V0 is determined (Step S106).

When the output voltage V2 is not higher than the minimal voltage V0 (V2 ≤ V0) (NO in Step S106), neither the output voltage V1 of the first battery 131 nor the output voltage V2 of the second battery 132 can be used to operate the portable telephone device 1. Therefore, the portable telephone device 1 is powered down (Step S111).

When the output voltage V2 is higher than the minimal voltage V0 (V2 > V0) (YES in Step S106), this indicates that the second battery 132 has power capable of normally operating the portable telephone device 1. In such a case, the selector switch 123 sets the switching signal SW to the high level and transmits the switching signal SW of the high level to the first switching element 121 and the second switching element 122 (Step S107).

The switching signal SW of the high level is transmitted to the first switching element 121 without any processing. On the other hand, the switching signal SW of the high level is inverted by passing through the inverter 124 and becomes the low level, so that the switching signal SW of the low level is transmitted to the second switching element 122.

As a result, the first switching element 121 becomes the OFF state and the second switching element 122 becomes the ON state (Step S108). Therefore, the output voltage V2 is applied to the load circuit 20 through the second switching element 122 which is in the ON state. On the other hand, the output voltage V1 is not applied to the load circuit 20 because the first switching element 121 is in the OFF state. That is, the portable telephone device 1 becomes a state in which the second battery 132 is in use as the power source. As the second battery 132 is used, the output voltage V2 thereof gradually reduces.

After the transmission of the switching signal SW, the selector switch 123 constantly monitors whether or not the output voltage V2 is lower than the minimal voltage V0 (V2 < V0) (Step S109). The selector switch 123 continues to monitor until the output voltage V2 becomes lower than the minimal voltage V0 (V2 < V0) (NO in Step S109).

The charging circuit 11 firstly charges the first battery 131. After the charging of the first battery 131 is completed, the charging circuit 11 starts to charge the second battery 132. While any one of the first battery 131 and the second battery 132 is used, the charging of the other battery is completed.

In the case where the first battery 131 consumes the power and the output voltage V1 becomes lower than the minimal voltage V0 (YES in Step S105), the charging circuit 11 starts to charge the first battery 131 while the portable telephone device 1 uses the second battery 132 as the power source. The charging of the first battery 131 is completed while the second battery 132 is used. Therefore, when the second battery 132 consumes the power and the output voltage V2 becomes lower than the minimal voltage V0, the first battery 131 is already in a usable state.

Thus, when the output voltage V2 becomes lower than the minimal voltage V0 (YES in Step S109), the selector switch 123 determines whether or not the output voltage V1 becomes higher than the minimal voltage V0 (Step S110).

When the output voltage V1 is not higher than the minimal voltage V0 (V1 ≤ V0) (NO in Step S110), neither the output voltage V1 nor the output voltage V2 can be used to operate the portable telephone device 1. Therefore, the portable telephone device 1 is powered down (Step S111).

When the output voltage V1 becomes higher than the minimal voltage V0 (V1 > V0) (YES in Step S110), this indicates that the first battery 131 has the restored power capable of normally operating the portable telephone device 1. In such a case, the selector switch 123 sets the switching signal SW to the low level and transmits the switching signal SW of the low level to the first switching element 121 and the second switching element 122 (Step S103). After that, the portable telephone device 1 uses the first battery 131 as the power source (Step S104).

Therefore, when the use of the first battery 131 starts again, the charging circuit 11 charges the second battery 132 while the first battery 131 is used. At the time when the output voltage V1 becomes lower than the minimal voltage V0 (YES in Step S105), the charging of the second battery 132 is completed. Therefore, the output voltage V2 becomes higher than the minimal voltage V0 (YES in Step S106). Thus, the second battery 132 is used instead of the first battery 131 (Steps S107 and S108).

As described above, according to the battery switching circuit 12 in this embodiment, the second battery 132 is used next to the first battery 131. Further, the second battery 132 is charged next to the first battery 131. Therefore, it is possible to realize effective use and charging in the plurality of batteries.

In the battery switching circuit 12, each of the first switching element 121 and the second switching element 122 is composed of the two P-channel MOS silicon field effect transistors which are connected with each other in series. This reason will be described later.

For example, the case where the output voltage V1 of the first battery 131 reduces as the first battery 131 is used will be described with reference to FIG. 8. In FIG. 8, assume that the output voltage V1 of the first battery 204 is given by V1; the output voltage V2 of the second battery 205 is given by V2, and voltage drop caused by the parasitic diode of the P-channel MOS silicon field effect transistor is given by VD. The minimal voltage necessary to operate the portable telephone device 1 is given by V0. As in the conventional power source switching circuit 201 shown in FIG. 8, when the second switching element 207 is composed of the P-channel MOS silicon field effect transistor of one stage and the following expression

$$V1 < V2 - VD \qquad (1)$$

is satisfied, the voltage of the second battery 205 (output voltage V2) acts on the first battery 204 (output voltage V1) . Therefore, it is necessary to stop the use of the first battery 204 and to start the use of the second battery 205 before the expression (1) holds.

However, in such a case, the first battery 204 can be used until the output voltage V1 gradually reduces and reaches (V2 - VD). In general, V0 < (V2 - VD). As a result, a range in which the output voltage V1 becomes lower than (V2 - VD) and reduces to V0 cannot be used. Thus, the efficiency of use of the first battery 204 reduces.

In contrast to this, according to the battery switching circuit 12 in this embodiment, the second switching element 122 is composed of the P-channel MOS silicon field effect transistors of two stages. Therefore, in view of the characteristic of the P-channel MOS silicon field effect transistor, when the second switching element is in the OFF state, there is no case where the output voltage V2 of the second battery 205 acts on the first battery 204. In addition, the first battery 204 can be used until the output voltage V1 reduces to V0.

As described above, the battery switching circuit 12 according to this embodiment has the following effects. Firstly, while one battery (for example, the first battery 131) is used, the battery switching circuit 12 stops the use of the other battery (for example, the second battery 132), so that the amount of charged power of the used battery can be consumed within a limited range (up to the minimal voltage V0 at which the portable telephone device 1 operates).

Secondly, while one battery (forexample, the first battery 131) is used, the battery switching circuit 12 stops the use of the other battery (for example, the second battery 132), so that a voltage of the battery which is not used (second battery 132) can be prevented from applying to the battery which is being used (first battery 131).

Even in the case where the charging of one battery is not completed, when the power of the other battery is completely consumed, switching to the one battery which is not completely charged may be performed.

(Second Embodiment)

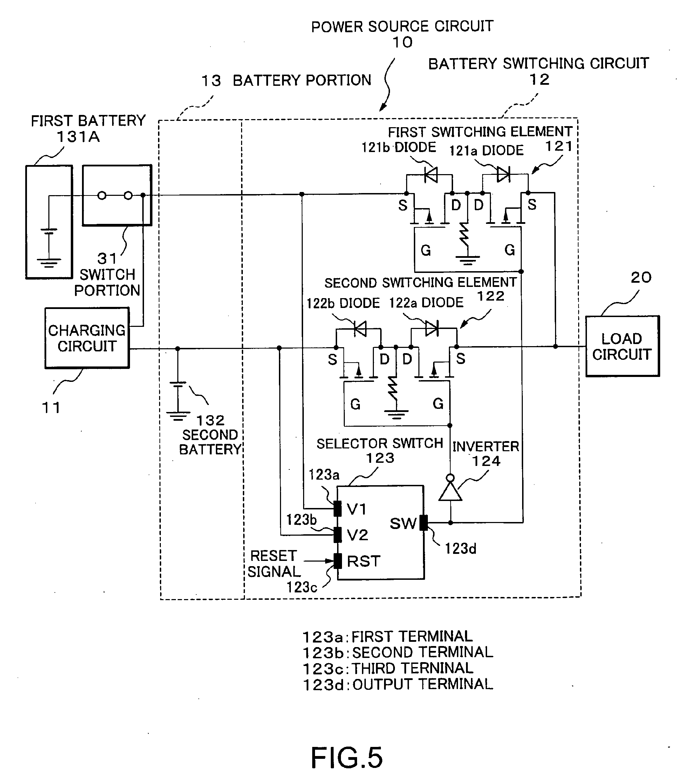

FIG. 5 is a block diagram showing a power source circuit 30 of a portable telephone device according to a second exemplary embodiment of the present invention. A first battery 131A corresponds to the first battery 131 of the power source circuit 10 in the first embodiment. In contrast to the power source circuit 10, the first battery 131A of the power source circuit 30 is removable to the portable telephone device. A point different from the first embodiment is that the first battery 131A is connected with the battery portion 13 through a switch portion 31. The power source circuit 30 has the same structure as that of the power source circuit 10 except for this point.

The switch portion 31 is connected with the selector switch 123. When the switch portion 31 is turned on to connect the first battery 131A with the selector switch 123, a signal indicating the output voltage V1 of the first battery 131A is transmitted to the selector switch 123. When the switch portion 31 is turned off (for example, a switching terminal of the switch portion 31 is grounded) to disconnect the first battery 131A with the selector switch 123, a signal indicating that the output voltage V1 is 0 is transmitted to the selector switch 123.

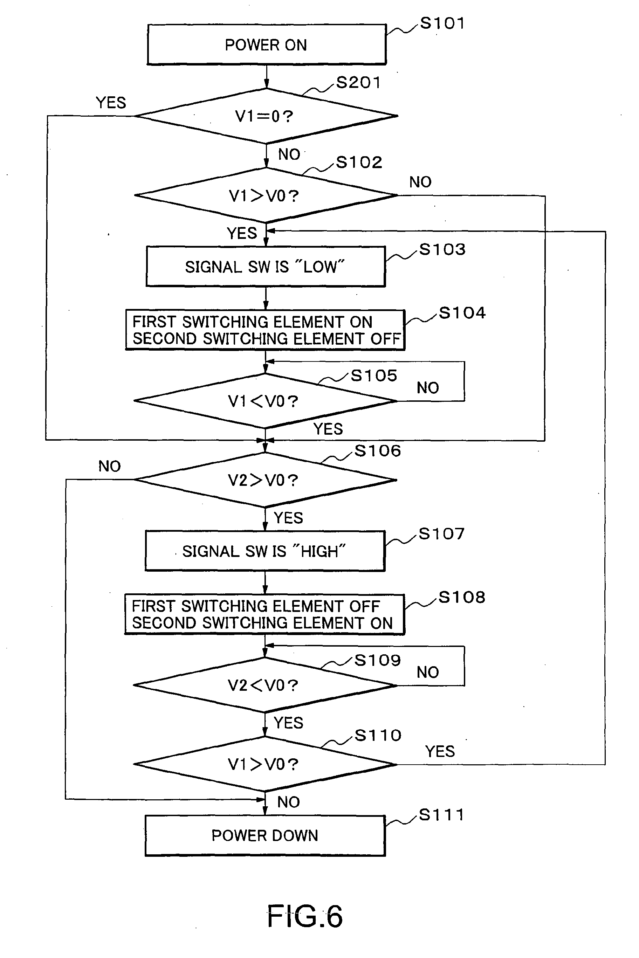

FIG. 6 is a flow chart showing operation of the battery switching circuit 12 according to the second exemplary embodiment. Hereinafter, the operation of the battery switching circuit 12 according to the second embodiment will be described with reference to FIG. 6.

When the power switch of the portable telephone device is turned on, the battery switching circuit 12 starts to operate, and then the reset signal RST becomes active, so that the selector switch 123 is reset (Step S101). Next, the selector switch 123 receives the signal indicating the output voltage V1 of the first battery 131A and determines whether or not the output voltage V1 indicated by the signal is 0 (Step S201).

When the output voltage V1 indicated by the signal is 0 (YES in Step S201), the selector switch 123 determines that the first battery 131A is not connected with the switch portion 31. Then, the selector switch 123 receives the signal indicating the output voltage V2 of the second battery 132 at the second terminal 123b and determines whether or not the output voltage V2 of the second battery 132 is higher than the minimal voltage V0 at which the portable telephone device 1 operates (Step S106) .

When the output voltage V1 indicated by the signal is not 0 (NO in Step S201), the selector switch 123 determines that the first battery 131A is connected with the switch portion 31. Then, the selector switch 123 executes Step S102 to Step S111 as shown in FIG. 4.

As described above, according to the portable telephone device in this embodiment, the first battery 131A is detachably attachable. Therefore, the first battery 131A detached from the portable telephone device 1 can be charged using a quick charger. When the charging of the first battery 131A which is performed by the charging circuit 11 is insufficient, a battery which is the same type as that of the first battery 131A and has completely charged can be connected with the switch portion 31. When the first battery 131A causes trouble, it can be exchanged for a new battery.

In the first and second embodiments, each of the first switching element 121 and the second switching element 122 is composed by using the P-channel MOS silicon field effect transistor. An N-channel MOS silicon field effect transistor can also be used instead of the P-channel MOS silicon field effect transistor. Here, in each of the first switching element 121 and the second switching element 122, if necessary, one of the source electrode and drain electrode of a first field effect transistor may be connected with corresponding one of the source electrode and drain electrode of a second field effect transistor. In addition, the other of the source electrode and drain electrode of the first field effect transistor may be connected with one of the battery and the load and the other of the source electrode and drain electrode of the second field effect transistor may be connected with the other of the battery and the load.

In the first and second embodiments, the battery portion 13 includes the two batteries 131 (or 131A) and 132. However, the number of batteries included in the battery portion 13 is not limited to two. The battery portion 13 can includes three or more batteries. In this case, the selector switch 123 can arbitrarily select a battery to be used and a battery to be charged. For example, assume that the battery portion 13 includes three batteries. While a first battery is used, both second and third batteries may be charged or any one of the second and third batteries may be charged.

In the second embodiment, the battery portion 13 includes the single detachably attachable battery 131A. When the battery portion 13 includes three or more batteries, two or more detachably attachable batteries may be used.

In the first and second embodiments, an example of a subject to which the battery switching circuit according to the present invention is applied is the portable telephone device. However, the present invention is not limited to the portable telephone device. The present invention can also be applied to, for example, a PDA (personal digital assistant) or other portable communication devices.

The operation of the selector switch 123 in the first and second embodiments can be executed using a computer program described in a language readable by a computer. When the selector switch 123 is intended to operate according to the computer program, for example, a memory for program storage is provided in the selector switch 123 and the computer program may be stored in the memory. The selector switch 123 may read out the computer program from the memory and execute the above-mentioned operation based on the computer program.

Alternatively, a recordingmediumthat stores the computer program may be set to the selector switch 123. In this case, the selector switch 123 reads out the computer program from the recording medium and executes the above-mentioned operation based on the computer program.

For example, the selector switch 123 can be composed of a digital signal processor or other control devices.

In this specification, the term "recording medium" includes all media capable of recording data.

With respect to the recording medium, for example, in addition to a nonvolatile memory, there are disk type recording media such as a compact disk read only memory (CD-ROM) and a phase change disk (PD), a magnetic tape (MT), a magneto optical disk (MO), a digital versatile disk (DVD), a DVD-read only memory (DVD-ROM), aDVD-randomaccessmemory (DVD-RAM), aflexibledisk, memory chips such as a random access memory (RAM) and a read only memory (ROM). In addition, there are an erasable programmable read only memory (EPROM), an electrically erasable programmable read only memory (EEPROM), smart media (registered trademark), a flash memory, a rewritable card type ROM such as a compact flash (registered trademark) card, a hard disk, and a portable hard disk drive (HDD). Any other means suitable to store the computer program can also be used.

Further, the inventor's intent is to retain all equivalents of the claimed invention even if the claims are amended during prosecution.

## Claims

1. A battery switching circuit for a portable communication device including a plurality of batteries, which selects a battery from the plurality of batteries and connects the selected battery with a load of the portable communication device, wherein
said battery switching circuit comprises :a selector switch that controls an order in which the plurality of batteries are used.

2. A battery switching circuit for a portable communication device including a plurality of batteries, which selects a battery from the plurality of batteries and connects the selected battery with a load of the portable communication device, the battery switching circuit comprising:

a plurality of switching elements, the number of which is equal to the number of batteries, which are connected with the plurality of batteries on a one-to-one basis and connected with the load; and
a selector switch which is connected with each of the plurality of batteries and each of the plurality of switching elements, which monitors an output voltage of each of the plurality of batteries, activates a switching element corresponding to a second battery holding power when a charged power of a first battery is completely consumed, and connects the second battery with the load through the switching element corresponding to the second battery,

wherein each of the switching elements comprises two field effect transistors which are connected with each other in series, a gate electrode of each of the two field effect transistors is connected with the selector switch, one electrode of source and drain electrodes of the two field effect transistor is connected with each other, and the other electrode of the source and drain electrodes of the two field effect transistor is connected with one of a corresponding battery and the load.

3. A battery switching circuit according to claim 2, wherein each of the first and second field effect transistors comprises a P-channel field effect transistor.

4. A portable communication device, comprising:

a plurality of batteries, at least one of the plurality of batteries being detachably attachable to the portable communication device; and a battery switching circuit which selects a battery from the plurality of batteries and connects the selected battery with a load of the portable communication device,

wherein the battery switching circuit for a portable communication device comprises:

a plurality of switching elements connected with the plurality of batteries and the load; and a selector switch which is connected with each of the plurality of batteries and each of the plurality of switching elements, which monitors an output voltage of each of the plurality of batteries, activates a switching element corresponding to a second battery holding power when a charged power of a first battery is completely consumed, connects the second battery with the load through the switching element corresponding to the second battery, and determines whether or not a detachably attachable battery is connected with the portable communication device,

wherein each of the switching elements comprises two field effect transistors which are connected with each other in series, a gate electrode of each of the two field effect transistors is connected with the selector switch, one electrode of source and drain electrodes of the two field effect transistor is connected with each other, and the other electrode of the source and drain electrodes of the two field effect transistor is connected with one of a corresponding battery and the load.

5. A portable communication device according to claim 4, wherein each of the first and second field effect transistors comprises a P-channel field effect transistor.

6. A portable communication device according to claim 4 or 5, wherein the portable communication device comprises a portable telephone terminal device.

7. A battery switching method for a portable communication device for selecting a battery from a plurality of batteries included in the portable communication device and connecting the selected battery with a load of the portable communication device, the battery switching method comprising:

comparing an output voltage of a first battery of the plurality of batteries with a minimal voltage at which the portable communication device operates; comparing an output voltage of a second battery of the plurality of batteries with the minimal voltage when the output voltage of the first battery is lower than the minimal voltage; connecting the second battery with the load when the output voltage of the second battery is higher than the minimal voltage; and connecting the first battery with the load when the output voltage of the first battery is restored to become higher than the minimal voltage after the output voltage of the second battery becomes lower than the minimal voltage.

8. A battery switching method for a portable communication device for selecting a battery from a plurality of batteries included in the portable communication device and connecting the selected battery with a load of the portable communication device, the battery switching method comprising:

comparing an output voltage of a first battery of the plurality of batteries with a minimal voltage at which the portable communication device operates; comparing an output voltage of a battery other than the first battery with the minimal voltage when the output voltage of the first battery is lower than the minimal voltage, and repeatedly connecting the battery other than the first battery with the load when the output voltage of the battery other than the first battery is higher than the minimal voltage; and connecting the first battery with the load when the output voltage of the first battery is restored to become higher than the minimal voltage after the output voltage of the battery other than the first battery becomes lower than the minimal voltage.

9. A battery switching method for a portable communication device according to claim 7 or 8, further comprising:

connecting the first battery with the load when the output voltage of the first battery is higher than the minimal voltage.

10. A battery switchingmethod for a portable communication device according to any of claims 7 to 9, wherein at least one of the plurality of batteries is detachably attachable to the portable communication device,

   wherein the battery switching method further comprises:

   determining whether or not a detachably attachable battery is connected with the portable communication device.

11. A signal-bearing medium tangibly storing a program of machine-readable instructions for causing a computer to execute a battery switching method for a portable communication device for selecting a battery from a plurality of batteries included in a portable communication device and connecting the selected battery with a load of the portable communication device,

   wherein the program comprises:

   a first process for comparing an output voltage of a first battery of the plurality of batteries with a minimal voltage at which the portable communication device operates;
   a second process for comparing an output voltage of a second battery of the plurality of batteries with the minimal voltage when the output voltage of the first battery is lower than the minimal voltage;
   a third process for connecting the second battery with the load when the output voltage of the second battery is higher than the minimal voltage; and
   a fourth process for connecting the first battery with the load when the output voltage of the first battery is restored to become higher than the minimal voltage after the output voltage of the second battery becomes lower than the minimal voltage.

12. A signal-bearing medium tangibly storing a program of machine-readable instructions for causing a computer to execute a battery switching method for a portable communication device for selecting a battery from a plurality of batteries included in a portable communication device and connecting the selected battery with a load of the portable communication device,

   wherein the program comprises:

   a first process for comparing an output voltage of a first battery of the plurality of batteries with a minimal voltage at which the portable communication device operates;
a second process for comparing an output voltage of a battery other than the first battery with the minimal voltage when the output voltage of the first battery is lower than the minimal voltage, and repeatedly connecting the battery other than the first battery with the load when the output voltage of the battery other than the first battery is higher than the minimal voltage; and
a third process for connecting the first battery with the load when the output voltage of the first battery is restored to become higher than the minimal voltage after the output voltage of the battery other than the first battery becomes lower than the minimal voltage.

13. A signal-bearing medium tangibly storing a program of machine-readable instructions for causing a computer to execute a battery switching method for a portable communication device according to claim 11, wherein at least one of the plurality of batteries is detachably attachable to the portable communication device,

   wherein the program further comprises a process of determining whether or not a detachably attachable battery is connected with the portable communication device.

14. A battery switching circuit for a portable communication device including a plurality of batteries, comprising:

   means for selecting a battery from the plurality of batteries;
   means for connecting the selected battery with a load of the portable communication device, and
   means for controlling an order in which the plurality of batteries are used.

1 PORTABLE TELEPHONE DEVICE

10

20 LOAD CIRCUIT

POWER SOURCE CIRCUIT

+

−

21 CPU

24 RF

22 MEMORY

25 LCD

23 KEY INPUT CIRCUIT

26 SOUND SOURCE

27 CAMERA

FIG.1

10 POWER SOURCE CIRCUIT

12

11

13

CHARGING CIRCUIT

BATTERY PORTION

BATTERY SWITCHING CIRCUIT

TO THE LOAD CIRCUIT

FIG.2

POWER SOURCE CIRCUIT
10

BATTERY SWITCHING CIRCUIT
12

13 BATTERY PORTION

11

CHARGING
CIRCUIT

FIRST SWITCHING ELEMENT
121b DIODE    121a DIODE    121

S    D    D    S

G    G

131
FIRST
BATTERY

SECOND SWITCHING ELEMENT
122b DIODE    122a DIODE    122

S    D    D    S

G    G

132
SECOND
BATTERY

20

LOAD
CIRCUIT

SELECTOR SWITCH    INVERTER
123    124

123a

V1

123b    V2    SW

RESET    RST
SIGNAL

123c    123d

123a : FIRST TERMINAL
123b : SECOND TERMINAL
123c : THIRD TERMINAL
123d : OUTPUT TERMINAL

# FIG.3

```
                    ┌──────────────────────┐  S101
                    │      POWER ON        │
                    └──────────────────────┘
                              │
                              ▼        S102
                         ◇─────────◇      NO
                        ◇           ◇────────────────┐
                        ◇  V1>V0 ?  ◇                 │
                         ◇         ◇                  │
                           ◇─────◇                    │
                              │ YES ◄─────────────────┼──────┐
                              ▼                        │      │
                    ┌──────────────────────┐  S103     │      │
                    │  SIGNAL SW IS "LOW"  │           │      │
                    └──────────────────────┘           │      │
                              │                         │      │
                    ┌──────────────────────┐  S104     │      │
                    │ FIRST SWITCHING ELEMENT ON        │      │
                    │ SECOND SWITCHING ELEMENT OFF │    │      │
                    └──────────────────────┘           │      │
                              │◄──────────────┐        │      │
                              ▼        S105    │        │      │
                         ◇─────────◇           │        │      │
                        ◇           ◇  NO       │       │      │
                        ◇  V1<V0 ?  ◇───────────┘        │      │
                         ◇         ◇                     │      │
                           ◇─────◇  YES                  │      │
                              │◄───────────────────────────────┘
                              ▼        S106
          NO           ◇─────────◇
        ┌────────────◇           ◇
        │            ◇  V2>V0 ?  ◇
        │             ◇         ◇
        │               ◇─────◇
        │                  │ YES
        │                  ▼
        │        ┌──────────────────────┐  S107
        │        │  SIGNAL SW IS "HIGH" │
        │        └──────────────────────┘
        │                  │
        │        ┌──────────────────────┐  S108
        │        │ FIRST SWITCHING ELEMENT OFF
        │        │ SECOND SWITCHING ELEMENT ON │
        │        └──────────────────────┘
        │                  │◄──────────────┐
        │                  ▼        S109    │
        │             ◇─────────◇           │
        │            ◇           ◇  NO       │
        │            ◇  V2<V0 ?  ◇───────────┘
        │             ◇         ◇
        │               ◇─────◇  YES
        │                  │        S110
        │                  ▼
        │             ◇─────────◇              YES
        │            ◇           ◇─────────────────────────┐
        │            ◇  V1>V0 ?  ◇
        │             ◇         ◇
        │               ◇─────◇
        │                  │ NO
        └──────────────────┤
                           ▼
                 ┌──────────────────────┐  S111
                 │     POWER DOWN       │
                 └──────────────────────┘
```

# FIG.4

15

EP 1 575 177 A1

POWER SOURCE CIRCUIT
10

13 BATTERY PORTION

BATTERY SWITCHING CIRCUIT
12

FIRST BATTERY
131A

FIRST SWITCHING ELEMENT
121b DIODE    121a DIODE    121

SECOND SWITCHING ELEMENT
122b DIODE   122a DIODE   122

31
SWITCH
PORTION

CHARGING
CIRCUIT

11

132
SECOND
BATTERY

SELECTOR SWITCH
123

123a

123b

RESET
SIGNAL

123c

V1

V2

RST

SW

INVERTER
124

123d

20

LOAD
CIRCUIT

123a: FIRST TERMINAL
123b: SECOND TERMINAL
123c: THIRD TERNINAL
123d: OUTPUT TERMINAL

FIG.5

16

POWER ON — S101

V1=0 ? — S201

YES

NO

V1>V0 ? — S102

NO

YES

SIGNAL SW IS "LOW" — S103

FIRST SWITCHING ELEMENT ON
SECOND SWITCHING ELEMENT OFF — S104

V1<V0 ? — S105

NO

YES

V2>V0 ? — S106

NO

YES

SIGNAL SW IS "HIGH" — S107

FIRST SWITCHING ELEMENT OFF
SECOND SWITCHING ELEMENT ON — S108

V2<V0 ? — S109

NO

YES

V1>V0 ? — S110

YES

NO

POWER DOWN — S111

FIG.6

FIG.7

201 BATTERY SWITCHING CIRCUIT

FIRST SWITCHING ELEMENT
206

206a
DIODE

D    S

G

SECOND SWITCHING ELEMENT
207a DIODE    207

D    S

G

202

CHARGING
CIRCUIT

204
FIRST
BATTERY

205
SECOND
BATTERY

SELECTOR SWITCH
208

208a

208b

RESET
SIGNAL

208c

V1

V2

RST

SW

INVERTER
209

208d

203

LOAD
CIRCUIT

208a : FIRST TERMINAL
208b : SECOND TERMINAL
208c : THIRD TERMINAL
208d : OUTPUT TERMINAL

FIG.8

**European Patent Office**

**EUROPEAN SEARCH REPORT**

Application Number

EP 05 00 4570

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|----------|---|---|---|
| X | US 6 157 166 A (ODAOHHARA ET AL) 5 December 2000 (2000-12-05) * abstract; figures 1,2 * | 1-3,14 | H04B1/16 H02J7/00 |
| Y | ----- | 4-13 | |
| X | EP 0 463 593 A (KABUSHIKI KAISHA TOSHIBA) 2 January 1992 (1992-01-02) * figures 15A-C * | 1 | |
| Y | ----- | 4-13 | |
| A | US 5 666 006 A (TOWNSLEY ET AL) 9 September 1997 (1997-09-09) * abstract; figure 4 * | 1-14 | |
| A | US 6 346 794 B1 (ODAOHHARA SHIGEFUMI) 12 February 2002 (2002-02-12) * the whole document * ----- | 1-14 | |
|  |  |  | TECHNICAL FIELDS SEARCHED (Int.Cl.7) H04B H02J |

The present search report has been drawn up for all claims

| Place of search | Date of completion of the search | Examiner |
|---|---|---|
| Munich | 10 June 2005 | Ciccarese, C |

EPO FORM 1503 03.82 (P04C01)

**ANNEX TO THE EUROPEAN SEARCH REPORT**
**ON EUROPEAN PATENT APPLICATION NO.**          EP 05 00 4570

This annex lists the patent family members relating to the patent documents cited in the above-mentioned European search report.
The members are as contained in the European Patent Office EDP file on
The European Patent Office is in no way liable for these particulars which are merely given for the purpose of information.

10-06-2005

| Patent document cited in search report | | Publication date | Patent family member(s) | | Publication date |
|---|---|---|---|---|---|
| US 6157166 | A | 05-12-2000 | JP | 2000112577 A | 21-04-2000 |
| EP 0463593 | A | 02-01-1992 | JP | 4054619 A | 21-02-1992 |
| | | | JP | 4054620 A | 21-02-1992 |
| | | | JP | 4054621 A | 21-02-1992 |
| | | | JP | 4055925 A | 24-02-1992 |
| | | | JP | 4055926 A | 24-02-1992 |
| | | | EP | 0463593 A2 | 02-01-1992 |
| | | | KR | 9401689 B1 | 05-03-1994 |
| | | | US | 5553294 A | 03-09-1996 |
| US 5666006 | A | 09-09-1997 | AU | 2510695 A | 05-12-1995 |
| | | | WO | 9531848 A1 | 23-11-1995 |
| US 6346794 | B1 | 12-02-2002 | JP | 3323832 B2 | 09-09-2002 |
| | | | JP | 2001008370 A | 12-01-2001 |

EPO FORM P0459

For more details about this annex : see Official Journal of the European Patent Office, No. 12/82